# EUROPÄISCHE PATENTSCHRIFT

(11) **EP 1 941 140 B1**
(45) Veröffentlichungstag und Bekanntmachung des Hinweises auf die Patenterteilung: **21.07.2010**
(21) Anmeldenummer: 06791775.7
(22) Anmeldetag: 01.09.2006
(51) Int. Cl.: F02D 13/02, F02B 33/22, F02B 33/26, F02M 23/00

(54) **BRENNKRAFTMASCHINE**
INTERNAL COMBUSTION ENGINE
MOTEUR A COMBUSTION

(30) Priorität: 05.09.2005 DE 102005041992
(43) Veröffentlichungstag der Anmeldung: 09.07.2008
(73) Patentinhaber: SCHABINGER, Günter W., 75181 Pforzheim (DE)
(72) Erfinder: SCHABINGER, Günter W., 75181 Pforzheim (DE)
(74) Vertreter: Reinhardt, Harry
(86) Internationale Anmeldenummer: PCT/EP2006/008543
(87) Internationale Veröffentlichungsnummer: WO 2007/028545

(56) Entgegenhaltungen:
- JP-A- 7 042 564
- JP-A- 7 208 174
- JP-A- 56 110 517
- JP-A- 2001 020 745

## Beschreibung

### Gebiet der Erfindung

Die Erfindung betrifft eine Viertakt-Brennkraftmaschine, die durch einen Kleinkompressor aufgeladen wird. In diesem Zusammenhang bedeutet Kleinkompressor, dass dessen Hubraum kleiner dimensioniert ist als der einzylindrige Hubraum der Brennkraftmaschine.

### Stand der Technik

Während bei PKW-Motoren im Hochleistungsbereich Lader Stand der Technik sind, wird im Zweiradsektor aus Gründen der Fördercharakteristik und der Produktionskosten das Hochdrehzahlkonzept bevorzugt.

Aus der JP 56 110517 A ist ein Kompressor an einer mehrzylindrigen Brennkraftmaschine vorbekannt, wobei die Größe des Kompressorhubraums den Einzelhubräumen der Brennkraftmaschine entspricht. Das Drehzahlverhältnis zwischen Kompressor und vierzylindriger Brennkraftmaschine ist wegen der gemeinsamen Kurbelwelle dahingehend festgelegt, dass der Kompressor einen halben Arbeitszyklus bei einem Arbeitszyklus der Brennkraftmaschine durchführt. Die komprimierte Luft wird über einen den Zylindern der Brennkraftmaschine gemeinsamen, mehrfach mündenden Ladekanal der Brennkraftmaschine zugeführt. Dies führt wegen der Druckveränderung in der vorgelagerten Ladung dazu, dass der zuerst geladene Zylinder der Brennkraftmaschine eine größere Ladungsmenge erhält als der nachfolgende Zylinder, was zu ungünstigen Druckschwankungen im Ladekanal führt. Eine taktgerechte, mengengleiche Zuführung der Ladeluft ist nicht gewährleistet.

Aus der WO 02/20958 A1 ist eine Brennkraftmaschine mit einem durch ein Membranventil vorgesteuerten Einlasskanal vorbekannt, in den ein durch ein federbelastetes Ventil gesteuerter Ladekanal mündet. Der Zylinderkopf der Brennkraftmaschine weist ein Einlassventil auf.

Die WO 02/084089 A1 zeigt eine durch einen Kompressor aufgeladene Brennkraftmaschine. Der Kompressor und die Brennkraftmaschine sind durch einen Ladekanal direkt verbunden. Bei Aufladung ist daher der Hubraum des Kompressors größer dimensioniert als der Hubraum der Brennkraftmaschine. Diese Bauart führt zu größeren oszillierenden Kompressormassen als bei einem Kleinkompressor.

DE 27 46 022 A1 zeigt eine mehrzylindrige Viertakt-Brennkraftmaschine mit Lader, wobei ein kurbelgesteuerter Kleinkompressor durch separat angeordnete Ladekanäle Luft fördert. Die Ladekanäle werden nicht gesondert gesteuert.

Aus der US 5,785,015 A ist eine Brennkraftmaschine mit kurbelgesteuertem Kompressor bekannt. Er wird zur Gemischbildung bei einer Zweitakt-Brennkraftmaschine eingesetzt und hat keine primäre Ladefunktion.

CH 539 198 A zeigt eine aufgeladene Brennkraftmaschine mit Schiebersteuerung. Die Anordnung hat keine primäre Ladefunktion.

US 4,106,445 A zeigt eine Brennkraftmaschine mit zusätzlichem kolbengesteuertem Einlass. Der steuernde Kolben hat keine primäre Ladefunktion.

GB 1 549 969 A offenbart eine Brennkraftmaschine mit sehr kleinem Kolben im Zylinderkopf. Er hat keine primäre Ladefunktion.

In der US 6,295,965 B1 ist eine Brennkraftmaschine mit einem Einlasskanal und einem Auslasskanal gezeigt. Weitere Kanäle der Brennkraftmaschine sind schlitzgesteuert.

US 1,555,454 offenbart eine Brennkraftmaschine mit zusätzlicher Kolben- und Ventilanordnung. Das System hat keine primäre Ladefunktion.

### Aufgabenstellung

Ausgehend von diesem Stand der Technik liegt der Erfindung die Aufgabe zu Grunde, eine durch einen Kleinkompressor aufgeladene, hochdrehzahlfähige Viertakt-Brennkraftmaschine zu schaffen.

Diese Aufgabe wird durch eine Brennkraftmaschine mit den Merkmalen des Anspruches 1 gelöst.

Ein von der Nockenwelle der Brennkraftmaschine gesteuertes, federbelastetes Kolbensystem bildet das oszillierende Element eines Kleinkompressors. Der Hubraum des Kleinkompressors umfasst zum Beispiel ein Fünftel des Hubvolumens der Brennkraftmaschine. Die Brennkraftmaschine wird durch den Kompressor so aufgeladen, dass beispielsweise nur ein Bruchteil der Ladung für einen Arbeitszyklus der Brennkraftmaschine vorverdichtet und über einen separaten Ladekanal mit Hilfe eines von der Nockenwelle gesteuerten kurzhubigen Ventils nach Einlassschluss der Brennkraftmaschine zugeführt wird. Der konventionelle Einlasspfad einer Brennkraftmaschine bleibt dabei erhalten. Der Kompressor mit seinem gesondert gesteuerten Ladekanal weist eine gute Fördercharakteristik bei gutem Wirkungsgrad auf. Das vorgeschlagene Aufladesystem trägt durch Turbulenzen beim Ladevorgang zu einer verbesserten Gemischbildung bei. In der Folge darf von einer günstigen Wirkung auf die Verbrennung und die Rohemissionen ausgegangen werden.

Das Kolbensystem hat die Anordnung eines Hubventils zum Vorbild. An Stelle des Ventiltellers befindet sich der Leichtmetallkolben. Der Ventilschaft eines Hubventils wird durch eine ovale Drehsicherung ergänzt, die Ventilfeder, ihr Zubehör und gegebenenfalls der Tassenstößel bleiben erhalten.

Vorzugsweise ist der Einlass des Kleinkompressors schlitzgesteuert. Der Einlass der Brennkraftmaschine wird durch zwei oder drei Einlassventile gesteuert, wobei jeweils ein kurzhubiges Ventil den Ladekanal steuert.

Abhängig vom Hubraum des Kleinkompressors und den oszillierenden Massen kann ein kurbelgesteuerter Kolben vorgesehen werden. Der Antrieb des Kleinkompressors erfolgt dabei vorzugsweise in Kombination mit der Nockenwelle und mit identischer Drehzahl.

Um bei dieser Ausführungsart den Ansaugvorgang nicht durch eine überlagernde Strömung aus dem Ladekanal zu stören, ist ein federbelastetes Ventil im Zylinderkopf des Kleinkompressors vorgesehen. Dieses Ventil leitet den taktgerechten Ladevorgang ein. Danach öffnet das nockengesteuerte, kurzhubige Ladeventil im Zylinderkopf der Brennkraftmaschine. Die Kurbelhausentlüftung der Maschine erfolgt bei dieser Bauart über den Kleinkompressor.

Bei Mehrzylindermotoren wird die Drehzahl des Kleinkompressors taktgerecht angehoben.

Die vorgeschlagene Maschine lässt bei der
- der Literleistung,
- dem Drehmoment,
- dem Wirkungsgrad,
- den Rohemissionen und
- den Kosten pro Kilowatt
konkurrenzfähige Kennwerte erwarten.

Der Kleinkompressor kann somit ein werbewirksames Alleinstellungsmerkmal für eine Hochleistungsmaschine darstellen.

### Kurzbeschreibung der Figuren

Im Folgenden wird die Erfindung an Hand eines in den beigefügten Figuren dargestellten Ausführungsbeispiels erläutert. Es zeigt:
- Fig. 1: einen Längsschnitt des in den Zylinderkopf der Brennkraftmaschine integ- rierten Kleinkompressors,
- Fig. 2: einen Längsschnitt durch einen Teil eines Zylinderkopfs einer Brennkraft- maschine mit gesondertem Einlasskanal und kurzhubigem Einlassventil,

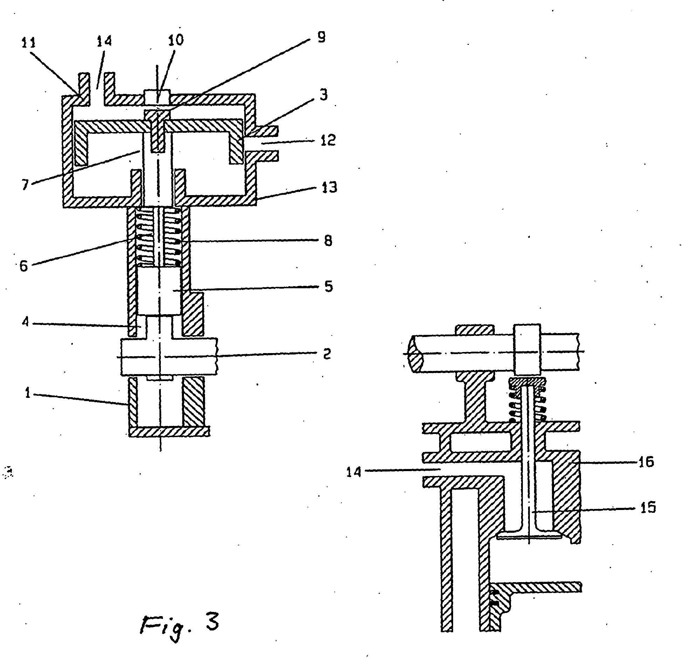

- Fig. 3: eine beispielhafte gemeinsame Anordnung der Fig. 1 und 2 zueinander oh- ne vollständigen Ladekanal.

### Ausführliche Beschreibung bevorzugter Ausführungsbeispiele

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen.

Bevor die Erfindung im Detail beschrieben wird, ist darauf hinzuweisen, das sie nicht auf die jeweiligen Bauteile der Brennkraftmaschine sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

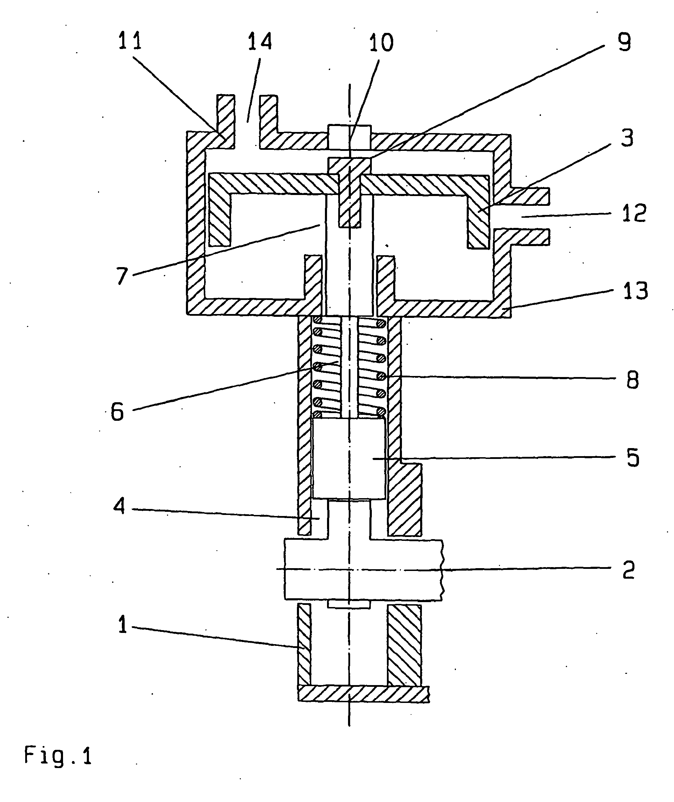

Figur 1 zeigt das Kompressorgehäuse 1 und die Nockenwelle 2 der Brennkraftmaschine zur Steuerung des Kompressorkolbens 3. Er weist in bekannter Weise einen Kompressionsring (nicht gezeichnet) und einen Ölabstreifring (nicht gezeichnet) auf. Der Kolben 3 wird mit Hilfe des Nockens 4, des Tassenstößels 5, des Kolbenschaftes 6, seiner ovalen Drehsicherung 7 und der Feder 8 betätigt. Der Kompressorkolben 3 und die Drehsicherung 7 sind durch eine gesicherte Verschraubung 9 verbunden. Zum Schutz des Kolbensystems bei Überdrehzahlen ist ein Widerlager 10 im Zylinderkopf 11 des Kompressors vorgesehen.

Der Einlass des Kompressors erfolgt über Einlassbohrungen 12 im Kompressorzylinder 13. Der Auslass erfolgt über den Ladekanal 14.

Die Viertakt-Brennkraftmaschine weist wenigstens einen Zylinder mit einem Zylinderkopf 16 sowie wenigstens eine Nockenwelle 2 auf und wird in bekannter Weise mit einer Druckumlaufschmierung und gegebenenfalls einem Lader betrieben. Ein in Fig. 1 dargestellter Kleinkompressors fördert Luft in die Brennkraftmaschine und arbeitet taktgerecht mit einem nockengesteuerten Ladeventil 15 zusammen. Wenigstens ein von anderen Einlasskanälen separierter Ladekanal 14 vom im Zylinderkopf 16 der Brennkraftmaschine angeordneten kurzhubigen Ladeventil 15 wird nach Einlassschluss so gesteuert, dass der Saug-/Ladetakt des Viertaktverfahrens ganz oder teilweise erhalten bleibt.

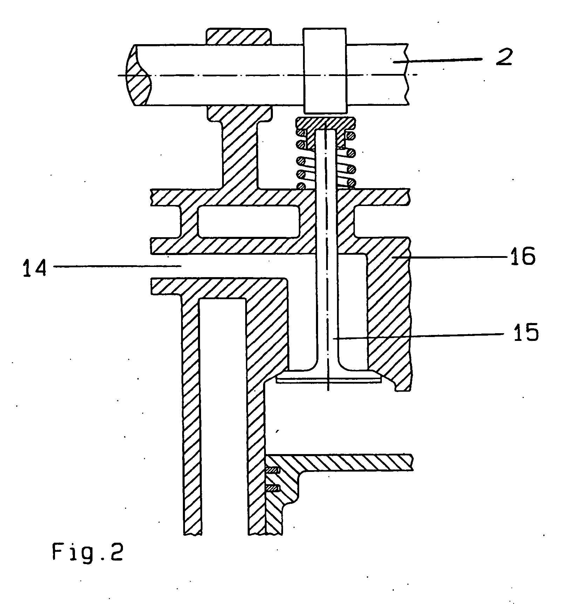

Das dargestellte Ausführungsbeispiel arbeitet wie folgt:
Die Brennkraftmaschine gemäß Fig. 2 und der Kompressor saugen über ihre Einlasskanäle, geregelt durch die Drosselklappen (nicht gezeichnet), die Ladeluft an.
Die Drosselklappen können elektronisch vernetzt sein. Dabei wird der Übergang vom Saug- in den Ladebereich von der elektronisch geregelten Drosselklappe des Kompressors (nicht gezeichnet) bewirkt.

Vorzugsweise ist der Einlass des Kleinkompressors schlitzgesteuert. Der Einlass der Brennkraftmaschine wird durch zwei oder drei Einlassventile gesteuert, wobei jeweils ein kurzhubiges Ventil den Ladekanal 14 steuert.

Im Einlasskanal der Brennkraftmaschine ist beispielsweise eine Niederdruckeinspritzung vorgesehen.

Der Kompressor saugt über die Einlassbohrungen 12 eine im Vergleich zur Brennkraftmaschine kleine Menge Ladeluft an, verdichtet sie im Kompressorzylinder 13 und führt sie über den Ladekanal 14 und ein kurzhubiges, separates Einlassventil 15 der Brennkraftmaschine zu. Der begonnene Arbeitszyklus setzt sich in bekannter Weise fort.

Das vorbeschriebene Ausführungsbeispiel bezieht sich auf eine Maschine mit kleinen oszillierenden Massen. Ihr nockengesteuerter Kleinkompressor kann direkt, das heißt ohne zusätzliches Ventil im Zylinderkopf 11 des Kleinkompressors, taktgerecht mit der Brennkraftmaschine zusammenarbeiten und ist besonders für Kleinmotoren geeignet.

Bei größeren Hubräumen ist abhängig vom Hubraum des Kleinkompressors und den oszillierenden Massen ein kurbelgesteuerter Kompressor vorgesehen. Eine z.B. einzylindrige Brennkraftmaschine weist dann zur Vorsteuerung der Ladeluft ein vorzugsweise federbelastetes Ventil im Zylinderkopf 11 des Kompressors auf. Eine Nockensteuerung dieses Ventils ist nicht erforderlich. Allerdings sind dem Fachmann auch andere Möglichkeiten zur Ansteuerung dieses Ventils bekannt. Der Antrieb des Kleinkompressors erfolgt dabei vorzugsweise in Kombination mit der Nockenwelle und vorzugsweise mit identischer Drehzahl, wobei auch andere Drehzahlen möglich sind und/oder erforderlich sein können.

Um bei dieser Ausführungsart den Ansaugvorgang nicht durch eine überlagernde Strömung aus dem Ladekanal zu stören, ist ein federbelastetes Ventil im Zylinderkopf des Kleinkompressors vorgesehen. Dieses Ventil leitet den taktgerechten Ladevorgang ein. Danach öffnet das nockengesteuerte, kurzhubige Ladeventil 15 im Zylinderkopf 16 der Brennkraftmaschine. Die Kurbelhausentlüftung der Maschine erfolgt bei dieser Bauart über den Kleinkompressor.

Eine mehrzylindrige Brennkraftmaschine kann von einem einzylindrigen oder mehrzylindrigen Kompressor geladen werden. In diesem Fall ist eine taktgerechte Drehzahlanpassung/Drehzahlerhöhung erforderlich. Die Vorsteuerung der Ladeluft erfolgt dann durch Ventile im Zylinderkopf 11 des Kompressors. Diese Ventile werden durch die Nockenwelle der Brennkraftmaschine oder von Nocken, die an rotierenden Maschinenteilen des Kompressors vorgesehen sind, taktgerecht betätigt und können auch federbelastet sein. Dem Fachmann sind auch andere Möglichkeiten bekannt, wie er diese Ventile bedarfsweise erfindungsgemäß ansteuern kann..

Bei den beschriebenen Bauweisen trägt das vorliegende Ladesystem durch Turbulenzbildung beim Ladevorgang zu einer verbesserten Gemischbildung bei. In der Folge darf von einer günstigen Wirkung auf die Verbrennung und die Rohemissionen ausgegangen werden.

Das Kurbelhaus der Brennkraftmaschine kann sowohl über den Einlasskanal der Brennkraftmaschine als auch über den Einlasskanal des Kompressors entlüftet werden.

Im Sinne der Vereinfachung können der kurbelgesteuerte Kompressor und die Brennkraftmaschine einen gemeinsamen Riemen- oder Kettentrieb aufweisen. Sie können auch eine gemeinsame Kurbelwelle aufweisen. Auch können an Stelle eines Hubkolbenkompressors andere Kompressor-/Laderbauarten vorgesehen werden.

Die jeweiligen Ausführungsarten können, abhängig von der Ladeluftmenge, mit oder ohne Ladeluftkühler dargestellt werden. Dabei kann ein Dieselmotor bauartbedingt ein wesentlich größeres Kompressorvolumen als ein vergleichbarer Ottomotor aufweisen. In diesem Zusammenhang sei auch darauf hingewiesen, dass der Kompressor eine variable Geometrie aufweisen kann.

Zum Zweck des Massenausgleichs kann ferner der Kleinkompressor über eine parallel zur Kurbelwelle liegende, zahnradgetriebene Welle angetrieben werden.

Am Beginn der Beschreibung wurde das Verfahren als Viertakt-Verfahren bezeichnet. Bei genauer Betrachtung ergibt sich aufgrund der vorliegenden Ausführungen ein differenzierteres Bild.

Die Maschine weist einen Ansaug-, Lade-, Verdichtungs-, Arbeits- und Ausstoßtakt auf. Genaugenommen ist der Ladetakt damit ein Nachladetakt. Im Gegensatz hierzu wird bei herkömmlicher Aufladung der Ansaugtakt durch den Aufladetakt ersetzt.

Das herkömmliche Aufladeverfahren kann gegebenenfalls zusätzlich zum vorbeschriebenen Verfahren angewandt werden.

Es versteht sich von selbst, dass diese Beschreibung verschiedensten Modifikationen, Änderungen und Anpassungen unterworfen werden kann, die sich im Bereich von Äquivalenten zu den anhängenden Ansprüchen bewegen.

### Bezugszeichenliste

- 1: Kompressorgehäuse
- 2: Nockenwelle
- 3: Kompressorkolben
- 4: Nocken
- 5: Tassenstößel
- 6: Kolbenschaft
- 7: ovale Drehsicherung
- 8: Feder
- 9: Verschraubung
- 10: Widerlager
- 11: Zylinderkopf
- 12: Einlassbohrung
- 13: Kompressorzylinder
- 14: Ladekanal (ohne Vorsteuerung)
- 15: Kurzhubiges Ventil
- 16: Zylinderkopf der Brennkraftmaschine

## Patentansprüche

1. Viertakt-Brennkraftmaschine mit wenigstens einem Zylinder mit einem Zylinderkopf (16) sowie wenigstens einer Nockenwelle (2), einer Druckumlaufschmierung und gegebenenfalls einem Lader, wobei ein Kleinkompressor mit wenigstens einem Zylinder mit zugeordnetem Zylinderkopf (11) Luft fördert und mit wenigstens einem nockengesteuerten Ladeventil zusammenarbeitet,
**dadurch gekennzeichnet, dass** wenigstens ein von anderen Einlasskanälen der Brennkraftmaschine separierter Ladekanal (14) von wenigstens einem im Zylinderkopf (16) der Brennkraftmaschine angeordneten kurzhubigen Ladeventil (15) nach Einlassschluss so taktgerecht gesteuert wird, dass der Saug-/Ladetakt des Viertaktverfahrens ganz oder teilweise erhalten bleibt, wobei entweder der Kleinkompressor nockengesteuert ist und zur taktgerechten Ladung des wenigsten einen Zylinders der Brennkraftmaschine mit der Drehzahl der Nockenwelle arbeitet oder der Kleinkompressor kurbelgesteuert ist und mit der Drehzahl der Nockenwelle oder mit einer im Vergleich zur Drehzahl der Nockenwelle (2) taktgerechten Drehzahlerhöhung zur taktgerechten Ladung des wenigstens einen Zylinders der Brennkraftmaschine arbeitet.

2. Viertakt-Brennkraftmaschine nach Anspruch 1, **dadurch gekennzeichnet, dass** der nockengesteuerte Kleinkompressor mit wenigstens einem Zylinder mit zugeordnetem Zylinderkopf (11) Luft fördert, wobei der Kleinkompressor mit Hilfe des von der Nockenwelle (2) gesteuerten Ladeventils (15) die Luft der Brennkraftmaschine zuführt.

3. Viertakt-Brennkraftmaschine nach Anspruch 1 oder 2, **dadurch gekennzeichnet, dass** der Ladekanal (14) zwischen dem nockengesteuerten Kleinkompressor und der Brennkraftmaschine ohne federbelastetes Ventil im Zylinderkopf (11) des Kleinkompressors angeordnet ist.

4. Viertakt-Brennkraftmaschine nach Anspruch 1, **dadurch gekennzeichnet, dass** der Kleinkompressor zur Vorsteuerung der Ladung ein vorzugsweise federbelastetes Ventil aufweist und mit Hilfe des von der Nockenwelle gesteuerten Ladeventils (15) die Luft der Brennkraftmaschine zuführt, wobei der Ladekanal (14) zwischen dem Kleinkompressor und der Brennkraftmaschine angeordnet ist.

5. Viertakt-Brennkraftmaschine nach Anspruch 1, **dadurch gekennzeichnet, dass** sie mehrere Zylinder aufweist, wobei der kurbelgesteuerte Kleinkompressor mit wenigstens einem Zylinder mit zugeordnetem Zylinderkopf (11) Luft fördert, wobei zur Vorsteuerung der Ladung taktgerecht gesteuerte Ventile im Kleinkompressor zur Zuführung der Luft in die Brennkraftmaschine vorgesehen sind , wobei die Ladekanäle (14) von den Ladeventilen (15) gesteuert werden.

6. Viertakt-Brennkraftmaschine nach Anspruch 5, **dadurch gekennzeichnet, dass** die Ladeventile (15) im Zylinderkopf (16) der Brennkraftmaschine angeordnet und von der Nockenwelle (2) gesteuert sind.

7. Viertakt-Brennkraftmaschine nach einem der vorhergehenden Ansprüche, **dadurch gekennzeichnet, dass** eine durch den Kleinkompressor bewirkte und über den separaten, ventilgesteuerten Ladekanal (14) geführte Ladeströmung eine durch eine Ladeluftmenge bedingte Turbulenzbildung, im Sinne einer verbesserten Gemischbildung und günstigen Wirkung auf die Verbrennung und die Rohemissionen, auslöst.

8. Viertakt-Brennkraftmaschine nach einem der vorhergehenden Ansprüche, **dadurch gekennzeichnet, dass** an einem Kolbenschaft (6) des Kleinkompressors eine ovale Drehsicherung (7) vorgesehen ist.

9. Viertakt-Brennkraftmaschine nach einem der vorhergehenden Ansprüche, **dadurch gekennzeichnet, dass** der Zylinderkopf (11) des Kleinkompressors ein Widerlager (10) aufweist.

10. Viertakt-Brennkraftmaschine nach einem der vorhergehenden Ansprüche, **dadurch gekennzeichnet, dass** eine Kurbelhausentlüftung über den Kleinkompressor erfolgt.

11. Viertakt-Brennkraftmaschine nach einem der vorhergehenden Ansprüche, **dadurch gekennzeichnet, dass** der Kleinkompressor und die Nockenwelle (2) der Brennkraftmaschine einen gemeinsamen Riemen- oder Kettentrieb aufweisen.

12. Viertakt-Brennkraftmaschine nach einem der vorhergehenden Ansprüche, **dadurch gekennzeichnet, dass** elektronisch vernetzte Drosselklappen in der Brennkraftmaschine und im Kleinkompressor vorgesehen sind.

13. Viertakt-Brennkraftmaschine nach einem der vorhergehenden Ansprüche, **dadurch gekennzeichnet, dass** der Kleinkompressor ein Hubkolbenkompressor oder ein Kompressor anderer Kompressors-/ Laderbauart ist und dass der Kleinkompressor vorzugsweise eine variable Geometrie aufweist.

14. Viertakt-Brennkraftmaschine nach einem der vorhergehenden Ansprüche, **dadurch gekennzeichnet, dass** zwei oder drei Einlassventile zur Steuerung des Einlasses der Brennkraftmaschine vorgesehen sind, wobei jeweils ein kurzhubiges Ventil zur Steuerung des Ladekanals (14) vorgesehen ist.

15. Viertakt-Brennkraftmaschine nach einem der vorhergehenden Ansprüche, **dadurch gekennzeichnet, dass** sie einen Ladeluftkühler aufweist.

16. Viertakt-Brennkraftmaschine nach einem der vorhergehenden Ansprüche, **dadurch gekennzeichnet, dass** ein Dieselmotor bauartbedingt ein wesentlich größeres Kompressorvolumen als ein vergleichbarer Ottomotor aufweisen kann.

17. Viertakt-Brennkraftmaschine nach einem der vorhergehenden Ansprüche, **dadurch gekennzeichnet, dass** sie eine parallel zur Kurbelwelle liegende Massenausgleichswelle zum Antrieb des Kleinkompressors aufweist.

## Claims

1. Four-stroke internal combustion engine comprising at least one cylinder with a cylinder head (16) and also having at least one camshaft (2), a pressure circulation lubrication and possibly a supercharger, a small-capacity compressor comprising at least one cylinder with an associated cylinder head (11) conveying air and cooperating with at least one cam-controlled charging valve,
**characterised in that** at least one charging channel (14) which is separated from other inlet channels of the internal combustion engine is controlled at the correct stroke by at least one short-stroke charging valve (15) which is disposed in the cylinder head (16) of the internal combustion engine after closure of the inlet such that the suction/charging stroke of the four-stroke process is maintained entirely or partially,
either the small-capacity compressor being cam-controlled and operating at the rotation speed of the camshaft for charging at the correct stroke of at least one cylinder of the internal combustion engine
or the small-capacity compressor being crank-controlled and operating at the rotation speed of the camshaft or at an increased rotation speed relative to the rotation speed of the camshaft (2) at the correct stroke for charging at the correct stroke of the at least one cylinder of the internal combustion engine.

2. Four-stroke internal combustion engine according to claim 1 **characterised in that** the cam-controlled small-capacity compressor having at least one cylinder with associated cylinder head (11) conveys air, the small-capacity compressor supplying the air to the internal combustion engine with the help of the charging valve (15) which is controlled by the camshaft (2).

3. Four-stroke internal combustion engine according to claim 1 or 2, **characterised in that** the charging channel (14) is disposed between the cam-controlled small-capacity compressor and the internal combustion engine without a spring-loaded valve in the cylinder head (11) of the small-capacity compressor.

4. Four-stroke internal combustion engine according to claim 1, **characterised in that** the small-capacity compressor has a preferably spring-loaded valve for pilot control of the charge and supplies the air to the internal combustion engine with the help of the charging valve (15) which is controlled by the camshaft, the charging channel (14) being disposed between the small-capacity compressor and the internal combustion engine.

5. Four-stroke internal combustion engine according to claim 1, **characterised in that** it comprises a plurality of cylinders, the crank-controlled small-capacity compressor having at least one cylinder with associated cylinder head (11) conveying air, valves which are controlled at the correct stroke for pilot control of the charge being provided in the small-capacity compressor for supplying the air into the internal combustion engine, the charging channels (14) being controlled by the charging valves (15).

6. Four-stroke internal combustion engine according to claim 5, **characterised in that** the charging valves (15) are disposed in the cylinder head (16) of the internal combustion engine and are controlled by the camshaft (2).

7. Four-stroke internal combustion engine according to one of the preceding claims, **characterised in that** a charging flow which is effected by the small-capacity compressor and guided via the separate, valve-controlled charging channel (14) initiates a turbulence formation which is caused by a quantity of charging air in the sense of an improved formation of the mixture and a favourable effect on the combustion and the untreated emissions.

8. Four-stroke internal combustion engine according to one of the preceding claims, **characterised in that** an oval rotary safety device (7) is provided on a piston shaft (6) of the small-capacity compressor.

9. Four-stroke internal combustion engine according to one of the preceding claims, **characterised in that** the cylinder head (11) of the small-capacity compressor comprises an abutment (10).

10. Four-stroke internal combustion engine according to one of the preceding claims, **characterised in that** a crankcase ventilation is effected via the small-capacity compressor.

11. Four-stroke internal combustion engine according to one of the preceding claims, **characterised in that** the small-capacity compressor and the camshaft (2) of the internal combustion engine have a common beltdrive or chain drive.

12. Four-stroke internal combustion engine according to one of the preceding claims, **characterised in that** electronically linked throttle valves are provided in the internal combustion engine and in the small-capacity compressor.

13. Four-stroke internal combustion engine according to one of the preceding claims, **characterised in that** the small-capacity compressor is a reciprocating compressor or a compressor of another compressor/supercharger construction and that preferably the small-capacity compressor comprises a variable geometry.

14. Four-stroke internal combustion engine according to one of the preceding claims, **characterised in that** two or three inlet valves for controlling an inlet of the internal combustion engine are provided, a short-stroke valve respectively being provided for controlling the charging channel (14).

15. Four-stroke internal combustion engine according to one of the preceding claims, **characterised in that** it has a charging air cooler.

16. Four-stroke internal combustion engine according to one of the preceding claims, **characterised in that** a diesel engine can have a small-capacity compressor with a substantially larger compressor volume than a small-capacity compressor of a comparable Otto engine, dependent upon the type of construction.

17. Four-stroke internal combustion engine according to one of the preceding claims, **characterised in that** it has a mass-balancing shaft which is situated parallel to the crankshaft for driving the small-capacity compressor.

## Revendications

1. Moteur à combustion à quatre temps comportant au moins un cylindre avec une tête de cylindre (16) ainsi qu'au moins un arbre à came (2), une lubrification sous pression centralisée et éventuellement un chargeur, un petit compresseur ayant au moins un cylindre avec une tête de cylindre associée (11) fournissant de l'air et coopérant avec au moins une soupape d'admission guidée par came, **caractérisé en ce qu'**au moins un canal d'admission (14) séparé d'autres canaux d'admission du moteur à combustion est piloté par au moins une soupape d'admission (15) à petit course disposée dans une tête de cylindre (16) du moteur à combustion, après la fermeture de l'admission, de manière si conforme à la cadence que le temps d'aspiration/admission du processus à quatre temps est obtenu totalement ou partiellement, le petit compresseur étant guidé par came et travaillant à la vitesse de rotation de l'arbre à came à l'admission conforme à la cadence du au moins un cylindre du moteur à combustion, ou bien le petit compresseur étant guidé par une manivelle et travaillant à la vitesse de rotation de l'arbre à came ou à une vitesse de rotation supérieure à la vitesse de rotation de l'arbre à came (2) conforme à la cadence, à l'admission conforme à la cadence du au moins un cylindre du moteur à combustion.

2. Moteur à combustion à quatre temps selon la revendication 1, **caractérisé en ce que** le petit compresseur guidé par came ayant au moins un cylindre avec tête de cylindre associée (11) fournit de l'air, le petit compresseur fournissant l'air au moteur à combustion à l'aide de la soupape d'admission (15) guidée par l'arbre à came (2).

3. Moteur à combustion à quatre temps selon la revendication 1 ou 2, **caractérisé en ce que** le canal d'admission (14) est disposé dans la tête de cylindre (11) du petit compresseur, entre le petit compresseur guidé par came et le moteur à combustion, sans soupape actionnée par un ressort.

4. Moteur à combustion à quatre temps selon la revendication 1, **caractérisé en ce que** le petit compresseur présente une soupape de préférence actionnée par un ressort pour le pré-guidage de l'admission et fournit à l'aide de la soupape d'admission (15) guidée par l'arbre à came l'air au moteur à combustion, le canal d'admission (14) étant disposé entre le petit compresseur et le moteur à combustion.

5. Moteur à combustion à quatre temps selon la revendication 1, **caractérisé en ce qu'**il comporte plusieurs cylindres, le petit cylindre guidé piloté par manivelle et ayant au moins un cylindre avec tête de cylindre (11) associée fournissant l'air, des soupapes guidées conformément à la cadence étant prévues dans le petit compresseur pour le pré-guidage de l'admission et la fourniture de l'air dans le moteur à combustion, les canaux d'admission (14) étant pilotés par les soupapes d'admission (15).

6. Moteur à combustion à quatre temps selon la revendication 5, **caractérisé en ce que** les soupapes d'admission (15) sont disposées dans la tête de cylindre (16) du moteur à combustion et guidées par l'arbre à came (2).

7. Moteur à combustion à quatre temps selon l'une des revendications précédentes, **caractérisé en ce qu'**une turbulence d'admission crée par le petit compresseur et conduite par le canal d'admission (14) séparé et piloté par soupape provoque une turbulence conditionnée par une quantité d'air d'admission, en vue de l'amélioration de la formation du mélange et d'un effet favorable sur la combustion et les gaz d'échappement.

8. Moteur à combustion à quatre temps selon l'une des revendications précédentes, **caractérisé en ce qu'**il est prévu sur la tige du piston (6) du petit compresseur une sécurité contre la rotation (7) ovale.

9. Moteur à combustion à quatre temps selon l'une des revendications précédentes, **caractérisé en ce que** la tête de cylindre (11) du petit compresseur présente une butée (10).

10. Moteur à combustion à quatre temps selon l'une des revendications précédentes, **caractérisé en ce qu'**il se produit une ventilation du logement de manivelle grâce au petit compresseur.

11. Moteur à combustion à quatre temps selon l'une des revendications précédentes, **caractérisé en ce que** le petit compresseur et l'arbre à came (2) du moteur à combustion présentent un entraînement par courroie ou chaîne commun.

12. Moteur à combustion à quatre temps selon l'une des revendications précédentes, **caractérisé en ce que** des clapets d'étranglement connectés de façon électronique sont prévus dans le moteur à combustion et dans le petit compresseur.

13. Moteur à combustion à quatre temps selon l'une des revendications précédentes, **caractérisé en ce que** le petit compresseur est un compresseur à piston ou un compresseur d'un autre type de conception ou d'admission et **en ce que** le petit compresseur a de préférence une géométrie variable.

14. Moteur à combustion à quatre temps selon l'une des revendications précédentes, **caractérisé en ce que** deux ou trois soupapes d'admission sont prévues pour le pilotage de l'admission du moteur à combustion, une soupape à petite course respective étant prévue pour le pilotage du canal d'admission (14).

15. Moteur à combustion à quatre temps selon l'une des revendications précédentes, **caractérisé en ce qu'**il comporte un refroidisseur d'air d'admission.

16. Moteur à combustion à quatre temps selon l'une des revendications précédentes, **caractérisé en ce qu'**un moteur diesel peut présenter, selon sa conception, un volume de compression sensiblement plus important qu'un moteur Otto comparable.

17. Moteur à combustion à quatre temps selon l'une des revendications précédentes, **caractérisé en ce qu'**il présente un arbre d'équilibrage de masse parallèle à l'arbre de manivelle pour l'entraînement du petit compresseur.
